(19) Europäisches Patentamt
European Patent Office
Office européen des brevets

(11) EP 1 647 033 B1

# (12) EUROPÄISCHE PATENTSCHRIFT

(45) Veröffentlichungstag und Bekanntmachung des Hinweises auf die Patenterteilung:
**30.07.2008 Patentblatt 2008/31**

(21) Anmeldenummer: **04741816.5**

(22) Anmeldetag: **17.06.2004**

(51) Int Cl.:
***H01B 1/12*** *(2006.01)* ***C09K 9/02*** *(2006.01)*

(86) Internationale Anmeldenummer:
**PCT/EP2004/051141**

(87) Internationale Veröffentlichungsnummer:
**WO 2004/112054 (23.12.2004 Gazette 2004/52)**

## (54) IONENLEITENDE THERMOPLASTISCHE ZUSAMMENSETZUNGEN FÜR ELEKTROCHROME VERGLASUNGEN

ION-CONDUCTIVE THERMOPLASTIC COMPOSITIONS FOR ELECTROCHROMIC GLAZING

COMPOSITIONS THERMOPLASTIQUES CONDUCTRICES D'IONS POUR VITRAGES ELECTROCHROMES

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.06.2003 DE 10327517**

(43) Veröffentlichungstag der Anmeldung:
**19.04.2006 Patentblatt 2006/16**

(73) Patentinhaber:
- **Kuraray Europe GmbH**
  **65926 Frankfurt am Main (DE)**
- **Gesimat GmbH,**
  **Gesellschaft für intelligente Materialen,**
  **und Technologien**
  **12555 Berlin (DE)**

(72) Erfinder:
- **STENZEL, Holger**
  **53773 Hennef (DE)**
- **KRAFT, Alexander**
  **12557 Berlin (DE)**
- **HECKNER, Karl-Heinz**
  **12557 Berlin (DE)**
- **ROTTMANN, Matthias**
  **10435 Berlin (DE)**
- **PAPENFUHS, Bernd**
  **63179 Obertshausen (DE)**
- **STEUER, Martin**
  **65835 Liederbach (DE)**

(74) Vertreter: **Kisters, Michael Marcus et al**
**Kuraray Europe GmbH**
**Patents and Trademarks**
**Mülheimer Strasse 26**
**53840 Troisdorf (DE)**

(56) Entgegenhaltungen:
**EP-A- 0 657 897** **EP-A- 1 227 362**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine ionenleitende, thermoplastische Zusammensetzung aus teilacetalisiertem Polyvinylalkohol, mindestens einem Leitsalz und mindestens einem Weichmacher und die Verwendung von hieraus hergestellten Folien in elektrochromen Verbundverglasungen.

## Technisches Gebiet

Verbundverglasungen, deren Transparenz bzw. Farbe durch Anlegen einer elektrischen Spannung verändert werden können, werden in der Literatur als elektrochrome Verglasungen bezeichnet. Typischerweise sind elektrochrome Verglasungen gemäß Figur 1 wie folgt aufgebaut: Glasscheibe (a) - transparente elektrisch leitende Schicht (b) - elektrochrome Schicht (c) - Festelektrolyt (d) - redoxfähige Ionenspeicherschicht oder zu (c) komplementäre elektrochrome Schicht (e) - transparente elektrisch leitende Schicht (f)- Glasscheibe (g).

Die Schichten c) und e) sind durch einen Festelektrolyten (d) von einander getrennt. Bei Anlegen einer Spannung an die Elektroden b) und f) werden die Schichten c) und e) elektrochemisch oxidiert bzw. reduziert, wobei im Falle, dass Schicht c) und/oder e) elektrochrome Schichten sind, deren Farbe und Lichtdurchlässigkeit geändert wird. Die Oxidation und Reduktion der Schichten c) und e) ist von einem Austausch von Ionen mit dem Festelektrolyten d) begleitet. Dieser muss daher eine ausreichend hohe Ionenkonzentration aufweisen. Weiterhin ist für einen schnellen Schaltvorgang eine entsprechend hohe Ionenleitfähigkeit des Festelektrolyten erforderlich.

Ein Festelektrolyt für elektrochrome Verglasungen muss neben einer ausreichend hohen Ionenleitfähigkeit auch chemische und elektrochemische Stabilität sowie optische Transparenz aufweisen.

Zur Herstellung von Festelektrolyten für elektrochrome Verglasungen sind bereits viele Materialien vorgeschlagen worden.

## Stand der Technik

In EP 1 056 097 sind zur Herstellung eines Festelektrolyten Homo- oder Copolymere von Acryl-, Methacryl- oder Styrolverbindungen in Kombination mit Weichmachern und Leitsalzen sowie mit Partikeln eines anorganischen oder polymeren Füllstoffs offenbart.

US 5,244,557, EP 392 839, EP 461 685 und EP 499 115 beschreiben Festelektrolyte auf Basis von Polyethylenoxid.

In handelsüblichen Verbundverglasungen ohne elektrochrome Eigenschaften werden häufig Zwischenfolien aus Polyvinylbutyral (PVB), d.h. einem teilacetalisierten Polyvinylalkohol eingesetzt. Polyvinybutyralfolien besitzen den Vorteil einer hohen Transparenz und verleihen den hieraus hergestellten Glaslaminaten eine gute mechanische Festigkeit.

Die Verwendung von Polyvinylbutyralfolien in elektrochromen Verbundverglasungen ist daher auch bekannt und z.B. in EP 1 227 362 und EP 0 657 897 offenbart. Die in diesen Anmeldungen vorgeschlagenen ionenleitenden Polyvinylbutyralfolien werden aus herkömmlichem PVB-Harz, Weichmachern und Leitsalzen sowie ggf. weiteren Zusätzen hergestellt. Um eine ausreichend hohe Ionenleitfähigkeit zu gewährleisten, ist hier allerdings ein höherer Weichmachergehalt, als in herkömmlichen, nicht ionenleitenden PVB-Folien notwendig. Ein erhöhter Weichmachergehalt verschlechtert die mechanischen Eigenschaften der Folie. Polyvinylbutyralfolien in elektrochromen Verglasungen besitzen daher entweder eine nicht ausreichende Ionenleitfähigkeit bei guter mechanischer Stabilität oder - bei erhöhtem Weichmachergehalt - eine verbesserte Ionenleitfähigkeit bei verringerter mechanischer Stabilität.

## Aufgabe

Aufgabe der vorliegenden Erfindung war es, die in Verbundverglasungen häufig eingesetzten Mischungen auf Basis von teilacetalisierten Polyvinylalkoholen so zu modifizieren, dass eine ausreichende Langzeitstabilität, eine gute Ionenleitfähigkeit und ein befriedigendes Schaltverhalten bei hinreichend guten mechanischen Eigenschaften von hieraus hergestellten elektrochromen Verglasungen resultiert.

Teilacetalisierte Polyvinylalkohole, hier insbesondere Polyvinylbutyral, werden großtechnisch hergestellt, indem Polyvinylacetat verseift und anschließend mit einem Aldehyd (Butanal) acetalisiert wird. Es entstehen dabei ternäre Polymere, die in der Regel Restacetatgehalte von bis zu 5 Gew.%, Polyvinylalkoholgehalte von 15 bis 30 Gew.% und einen Acetalisierungsgrad von 40 bis 80 % aufweisen.

## Darstellung der Erfindung

Überraschenderweise wurde gefunden, dass Mischungen aus mindestens einem Leitsalz, mindestens einem

Weichmacher und einem säurefunktionalisierten teilacetalisierten Polyvinylalkohol eine erhöhte Ionenleitfähigkeit und in hieraus hergestellten elektrochromen Verglasungen ein verbessertes Schaltverhalten und eine verbesserte Langzeitstabilität aufweisen.

Gegenstand der Erfindung ist daher eine Ionenleitende thermoplastische Zusammensetzung, enthaltend einen teilacetalisierten Polyvinylalkohol, mindestens ein Leitsalz und mindestens einen Weichmacher, wobei der teilacetalisierte Polyvinylalkohol ein Copolymer, enthaltend die Monomereinheiten

- Vinylacetat
- Vinylalkohol
- Acetal I aus Vinylalkohol und mindestens einem Aldehyd der Formel I

$R^1$-CHO I

mit $R^1$: verzweigter oder unverzweigter Alkylrest mit 1 bis 10 Kohlenstoffatomen
- Acetal II aus Vinylalkohol und einer Carbonylverbindung der Formel II

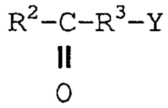

II

mit $R^2$ = H, verzweigter oder unverzweigter Alkylrest mit 1 bis 10 Kohlenstoffatomen, $R^3$ = direkte Verbindung, verzweigter oder unverzweigter Alkylrest mit 1 bis 10 Kohlenstoffatomen, Arylrest mit 6 bis 18 Kohlenstoffatomen, und Y = $-CO_2H$, $-SO_3H$, $-PO_3H_2$

ist.

Die erfindungsgemäßen Zusammensetzungen enthalten bevorzugt:

- 50 - 90 Gew.% insbesondere 50 - 70 Gew.% des beschriebenen teilacetalisierten Polyvinylalkohols
- 10 bis 50 Gew.% insbesondere 20 - 40 Gew.% mindestens eines Weichmachers und
- 0,1 bis 25 Gew.% insbesondere 2 - 10 Gew.% mindestens eines Leitsalzes.

Der in der vorliegenden Erfindung eingesetzte teilacetalisierte Polyvinylalkohol enthält mindestens zwei verschiedene Acetaleinheiten I und II, von denen die Acetaleinheit II bevorzugt aus Vinylalkohol bzw. Vinylalkoholeinheiten von Polyvinylalkohol und einem säurefunktionalisierten Aldehyd gewonnen wird. Als säurefunktionalisierter Aldehyd kann insbesondere Glyoxylsäure (hier steht $R^3$ für eine direkte Verbindung zwischen der Säurefunktion Y und dem Carbonylkohlenstoffatom) oder Brenztraubensäure eingesetzt werden.

Die Acetale I werden bevorzugt durch Umsetzen von Vinylalkohol bzw. Vinylalkoholeinheiten von Polyvinylalkohol mit mindestens einem Aldehyd der Gruppe Formaldehyd, Acetaldehyd, Propanal, n-Butanal (Butyraldehyd), Isobutanal Pentanal, Hexanal, Heptanal, Octanal und/oder Nonanal, jeweils als Reinstoff oder Isomerengemisch hergestellt. Besonders bevorzugt wird n-Butanal verwendet, das auch bei der Herstellung von handelsüblichem Polyvinylbutyral zum Einsatz kommt.

Das Zahlenverhältnis der Monomereinheiten des teilacetalisierten Polyvinylalkohols aus Acetal I und Acetal II kann in weiten Bereichen eingestellt werden und liegt bevorzugt bei 1:1 bis 10.0000:1, insbesondere bei 10:1 bis 1000: 1 bzw. 100:1 bis 1000:1.

Die Herstellung des teilacetalisierten Polyvinylalkohols kann analog zu der des handelüblichen Polyvinylbutyrals erfolgen; wobei eine Coacetalisierung von Polyvinylalkohol mit mindestens zwei unterschiedlichen Aldehyden bzw. Carbonylverbindungen unter Erhalt der Acetalgruppen I und II erfolgt. Alternativ kann gemäß DE 10 143 190 eine zusätzliche Acetalisierung eines bereits hergestellten Polyvinylbutyrals erfolgen.

Weiterhin ist es möglich, eine Mischung aus mehreren teilacetalisierten Polyvinylalkoholen, z.B. mit handelsüblichem PVB einzusetzen.

Es sei darauf hingewiesen, dass die funktionalisierten Acetaleinheiten II mit den im teilacetalisierten Polyvinylalkohol noch vorhandenen Vinylalkoholeinheiten unter Vernetzung reagieren können. Die Vernetzungsreaktion ist u.a. von der thermischen Behandlung des Materials bei der Folienherstellung abhängig und kann daher zu sehr unterschiedlichen Vernetzungsgraden führen.

Erfindungsgemäße Zusammensetzungen enthalten bevorzugt einen teilacetalisierten Polyvinylalkohol mit den

Repetiereinheiten

- 0,01 bis 5 Gew.% Vinylacetat
- 10 bis 40 Gew.%, bevorzugt 15 bis 35 Gew.% Vinylalkohol und
- 40 bis 80 Gew.%, bevorzugt 45 bis 75 Gew.% Acetale I und II

Als Leitsalz können Salze mit Kationen wie $Li^+$, $K^+$, $Na^+$, $Cs^+$, $Rb^+$, $NH_4^+$, $Mg^{2+}$, $Sr^{2+}$, $Ca^{2+}$, $La^{3+}$ und/oder $Zn^{2+}$ und Anionen der Gruppe $PF_6^-$, $SbF_6^-$, $AsF_6^-$, $F^-$, $Cl^-$, $Br^-$, $CF_3SO_3^-$, $ClO_4^-$, $ClO_3^-$, $BF_4^-$, $N(SO_2CF_3)_2^-$, $CF_3CO_2^-$, $B_4O_7^{2-}$, Pentaborat, Oxalat, Bisoxalatoborat ($C_4BO_8^-$), $AlCl_4^-$ und/oder Anionen organischer Sulfonsäuren eingesetzt werden.

Bevorzugte Leitsalze sind $LiClO_4$, $LiPF_6$, $LiSbF_6$, $LiAsF_6$, Li ($CF_3COO$) $LiBF_4$, $LiCF_3SO_3$, $Li_2C_2O_4$, LiN $(SO_2CF_3)_2$ oder Lithiumbisoxalatoborat ($LiC_9BO_8$).

Als Weichmacher bzw. Weichmacherkomponente für die erfindungsgemäßen Zusammensetzungen werden bevorzugt Verbindungen der Formel III

$$R^4 - (OCH_2CH_2)_n - OR^5 \qquad III$$

eingesetzt, wobei $R^9$, $R^5$ für gleiche oder verschiedene, verzweigte oder unverzweigte, cyclische oder acyclische, aliphatische, und/oder aromatische Kohlenwasserstoffreste mit 1 bis 15 Kohlenstoffatomen oder H und n für eine ganze Zahl zwischen 1 und 5 steht.

Zusätzlich können alle Weichmacher, die üblicherweise mit Polyvinylbutyral eingesetzt werden, verwendet werden. Hierzu zählen Ester von mehrwertigen aliphatischen oder aromatischen Säuren, mehrwertige aliphatische oder aromatische Alkohole oder Oligoetherglykole mit 1 bis 10, bevorzugt 1 bis 4 Ethereinheiten mit einem oder mehreren unverzweigten oder verzweigten aliphatischen oder aromatischen Substituenten, wie z.B. Dialkyladipat, Dialkylsebazat, Ester von Di-, Tri- oder Tetraglykolen mit linearen oder verzweigten aliphatischen Carbonsäuren.

Insbesondere geeignet sind Tri- oder Tetraethylenglykoldimethylether insbesondere in Kombination mit Triethylenglycol-di-2-ethyl-hexanoat (3G8), Triethylenglycoldi-n-heptanoat (3G7) und/oder Glycolester der Benzoesäure.

Die Bestandteile der erfindungsgemäßen Zusammensetzungen können in handelsüblichen Knetern, Mischern oder Extrudern miteinander vermischt werden. Es ist insbesondere möglich, die bei der Bearbeitung von Polyvinylbutyralen zu Folien verwendeten Extrusionsstraßen einzusetzen. Für eine weitere Verarbeitung der Zusammensetzungen haben sich Foliendicken analog den üblicherweise verwendeten Polyvinylbutyralfolien (0,38, 0,76, 1,14 und 1,5 mm) bewährt.

Ein Verfahren zur Herstellung von ionenleitenden Folien ist ebenfalls Gegenstand der Erfindung, wobei eine Mischung der beschriebenen, teilacetalisierten Polyvinylalkohole mit mindestens einem Weichmacher und mindestens einem Leitsalz jeweils mit den genannten Anteilen und bevorzugten Ausführungsformen zu einer Folie extrudiert wird.

Das erfindungsgemäße Extrusionsverfahren kann, um eine aufgeraute Folie zu erhalten, unter Schmelzebruchbedingungen wie z.B. in EP 0 185 863 beschrieben, durchgeführt werden.

Alternativ kann eine Prägung einer nicht aufgerauten Folie mit entsprechenden Walzen oder Bändern unter Erhalt einer ein- oder beidseitigen Rauheit von 40 - 120 μm erfolgen.

Bevorzugt wird die Oberflächenstruktur im Extrusionsprozess unmittelbar vor Austritt der Kunststoffschmelze aus der Extrusionsdüse durch das genannte Schmelzbruchverfahren entsprechend der EP 0 185 863 B1, auf deren Inhalt hier ausdrücklich hingewiesen wird, aufgebracht. Unterschiedliche Rauhigkeitsniveaus können durch Variation der Austrittsspaltweite und der Düsen-Lippentemperaturen unmittelbar am Düsenaustritt gezielt erzeugt werden. Dieses Verfahren führt zu einer unregelmäßigen, (stochastischen) annähernd isotropen Rauhigkeit (random roughness). Das heißt, der Messwert der Rauhigkeit ist über alle Richtungen gemessen annähernd gleich, die einzelnen Erhebungen und Vertiefungen jedoch unregelmäßig in ihrer Höhe und Verteilung angeordnet sind.

Die Messung der Oberflächenrauhigkeit der Folie, d.h. des Rauhigkeitswerts $R_z$ erfolgt nach DIN 4768 oder DIN EN ISO 4287 und DIN ISO 4288. Die zur Messung der Oberflächenrauhigkeit verwendeten Messgeräte müssen der EN ISO 3274 genügen. Die eingesetzten Profilfilter müssen der DIN EN ISO 11562 entsprechen.

Weiterhin ist Gegenstand der Erfindung ein elektrochromes Verbundsystem, aufgebaut aus zwei mit Elektroden beschichteten Körpern, von denen mindestens einer transparent ist, und mindestens einer einen elektrochromen Film aufweist, wobei die mit Elektroden beschichteten Körper durch eine Folie, die aus der erfindungsgemäßen, ionenleitenden thermoplastischen Zusammensetzung besteht, getrennt ist.

Zur Herstellung der erfindungsgemäßen Verbundglassysteme werden insbesondere zwei transparente Körper (a und g in Fig. 1), besonders bevorzugt zwei Glasscheiben mit leitfähigen transparenten Schichten (b und f in Fig. 1) als Elektroden, beschichtet.

Bevorzugt wird als transparentes Elektrodenmaterial Indiumdotiertes Zinnoxid (ITO), aluminiumdotiertes Zinkoxid, fluor- oder antimondotiertes Zinndioxid (FTO bzw. ATO) verwendet.

Auf mindestens eine dieser Elektroden (b in Fig.1) wird ein elektrochromer Film (c) aufgetragen, der bei anodischer Oxidation oder katodischer Reduktion die Farbe bzw. die Transparenz ändert. Bevorzugt werden hierzu Metallpolycyanometallate wie Eisenhexacyanoferrat, Übergangsmetalloxide wie Wolframtrioxid oder leitfähige Polymere, wie Polyanilin, Polythiophen oder deren Derivate verwendet.

Auf die andere Elektrode (f) wird eine redoxfähige Ionenspeicherschicht oder vorzugsweise eine zu (c) komplementäre elektrochrome Schicht (e) aufgetragen.

Bevorzugt enthalten die erfindungsgemäßen elektrochromen Verbundglassysteme als elektrochrome Beschichtungen Eisenhexacyanoferrat (auch als Preußisch Blau bezeichnet, c in Fig. 1) und Wolframtrioxid (e in Fig. 1).

Die folgenden Beispiele sollen die Erfindung näher erläutern, nicht aber den Schutzbereich, wie in den Ansprüchen definiert, einschränken.

**Beispiele**

1. Vergleichsbeispiel: Ionenleitende PVB-Folie und damit hergestelltes elektrochromes Element nach dem Stand der Technik

Es wurde eine ionenleitende PVB-Folie der Zusammensetzung:

- 65 Masse-% PVB mit einem Polyvinylbutyral-Gehalt von 77,5 Gew.%, einem PVOH-Gehalt von 20,5% und einem Polyvinylacetatgehalt von 2 % und
- 35 Masse-% des Weichmachers Tetraethylenglykoldimethylether enthaltend Lithiumtrifluormethansulfonat als Leitsalz (7,33 Masse-%) sowie den UV-Absorber Tinuvin 571 (0,15 Masse-%)

auf einem Doppelschneckenextruder mit gleichlaufenden Schnecken (Hersteller: Fa. Leistritz, Typ LSM 30.34), ausgerüstet mit Schmelzepumpe und Breitschlitzdüse, bei einer Massetemperatur von 160 °C extrudiert.

Mit dieser Folie wurde ein elektrochromes Element hergestellt. Dazu wurde eine K-Glas-Scheibe (FTO-beschichtetes Floatglas) elektrochemisch mit Wolframtrioxid und eine zweite K-Glas-Scheibe mit Preußisch Blau beschichtet. Diese beiden, mit den genannten elektrochromen Filmen versehenen Scheiben, wurden mit der oben beschriebenen ionenleitenden PVB-Folie (vorher bei 23°C und 50% relativer Luftfeuchtigkeit klimatisiert) nach dem Stand der Technik in einem Standardautoklavenprozess für Verbundsicherheitsglas zusammenlaminiert. Die aktive schaltbare Fläche dieses Elementes betrug 7,5 cm x 18,5 cm (213,75 $cm^2$). Nach der Laminierung erfolgten die Kontaktierung und die Abdichtung des elektrochromen Elementes mit einem Epoxidharz. Die Ionenleitfähigkeit der Folie im fertigen Element wurde aus dem Wechselstromwiderstand bei 40 kHz bestimmt. Es wurde ein Wert von $3{,}3\text{-}10^{-6}$ S/cm erhalten.

2. Ausführungsbeispiel: Erfindungsgemäße ionenleitende PVB-Folie

Es wurde eine ionenleitende PVB-Folie mit der Zusammensetzung:

- 65 Masse-% PVB mit einem PVOH-Gehalt von 20,2 %, einem Polyvinylacetatgehalt von 1,8 %, einem Gehalt an Acetal aus Glyoxylsäure von 0,5 % und einem Polyvinylbutyralgehalt von 77,5 % und
- 35 Masse% des Weichmachers Tetraethylenglykoldimethylether enthaltend Lithiumtrifluormethansulfonat als Leitsalz (7,33 Masse-%) sowie den UV-Absorber Tinuvin 571 (0,15 Masse-%)

wie in Beispiel 1 beschrieben, hergestellt.

Mit dieser Folie wurde ein elektrochromes Element, wie in Beispiel 1 beschrieben, hergestellt. Die aktive schaltbare Fläche dieses Elementes betrug 9 cm x 30 cm (270 $cm^2$). Nach der Laminierung erfolgten die. Kontaktierung und Abdichtung des elektrochromen Elementes wie in Beispiel 1 beschrieben. Die Ionenleitfähigkeit der Folie im fertigen Element wurde aus dem Wechselstromwiderstand bei 40 kHz bestimmt. Es wurde ein Wert von $6{,}9 \cdot 10^{-6}$ S/cm ermittelt.

Der Einbau der Glyoxylsäuregruppen in die Polymerkette des PVB führt also bei sonst gleicher Folienzusammensetzung zu einer Erhöhung der Ionenleitfähigkeit um den Faktor 2.

3. vergleich der elektrischen Schaltcharakteristik elektrochromer Elemente nach Ausführungsbeispiel 1 und 2

Von elektrochromen Elementen der Größe 10 cm x 30 cm, welche mit einer ionenleitenden Folie der Leitfähigkeit von $3{,}3 \cdot 10^{-6}$ S/cm (Vergleichsbeispiel 1) bzw. $6{,}9 \cdot 10^{-6}$ S/cm (Ausführungsbeispiel 2) hergestellt wurden, wurde die elektrische Schaltcharakteristik bei Schaltung mit einer Gleichspannung von 1,4 V aufgenommen. Dabei ist die mit Wolframtrioxid beschichtete Scheibe negativ und die mit Preußisch Blau beschichtete Scheibe positiv gepolt. Bei Entfärbung wurde eine Gleichspannung umgekehrter Polarität angelegt.

Figur 2 zeigt Stromdichte-Zeit-Kurven beider Elemente im Vergleich. Mit 1 ist die Stromdichte-Zeit-Kennlinie

eines Elementes nach dem Stand der Technik und mit 2 eine mit dem erfindungsgemäßen Polymerelektrolyten gekennzeichnet. Die höhere Schaltgeschwindigkeit des erfindungsgemäßen elektrochromen Elementes ist klar an den wesentlich höheren sowohl bei der Färbung als auch bei der Entfärbung fließenden Strömen zu erkennen. Bei Element 2 fließt innerhalb von 3 Minuten bei der Färbung eine elektrische Ladung von 12,48 $mC/cm^2$. Beim Element 1 sind nach 3 Minuten bei der Färbung erst 5,87 $mC/cm^2$ und auch nach 5 Minuten erst 8 $mC/cm^2$ geflossen. Da die Färbungstiefe proportional der geflossenen Ladung ist, ergibt sich aus diesem Ausführungsbeispiel, dass das erfindungsgemäße elektrochrome Element wesentlich schneller schaltet, als eines nach dem Stand der Technik.

4. Vergleich der Dauerschaltstabilität elektrochromer Elemente nach den Beispielen 1 und 2 unter Temperaturwechselbelastung

Mit elektrochromen Elementen der Größe 10 cm x 10 cm, welche mit einer ionenleitenden Folie nach Vergleichsbeispiel 1 bzw. Ausführungsbeispiel 2 hergestellt wurden, erfolgten Dauerschaltversuche unter Temperaturwechselbelastung, um die Langzeitstabilität der elektrochromen Elemente zu untersuchen.
Dabei wurden die Scheiben mit einer temperaturabhängigen Gleichspannung gefärbt und mit derselben temperaturabhängigen Spannung umgekehrter Polarität entfärbt (Polung wie in Beispiel 3 beschrieben).
Die Temperaturabhängigkeit der Spannung U ist durch folgende Gleichung gegeben:

$$U = 2{,}05V - 0{,}0145V/K \bullet \Delta T$$

mit U: Spannung bei der entsprechenden Scheibentemperatur T in V, $\Delta T$: Temperaturdifferenz T + 20°C in K.
Die Färbe- und Entfärbeschritte folgen jeweils unmittelbar nacheinander, wobei die Färbe- und Entfärbezeit jeweils 3 min betrug, so dass pro Stunde 10 Schaltzyklen bzw. 240 Schaltzyklen pro Tag durchlaufen wurden.
Die Temperaturwechselbelastung während der Schaltung wurde in einem Klimaschrank realisiert. Ein Temperaturzyklus dauert dabei jeweils einen Tag. Die Temperatur wird bei diesem Temperaturzyklus 4 h bei +30° gehalten, dann innerhalb 4 h von +30°C auf +80°C erhöht, dann 4 h bei +80°C gehalten, danach innerhalb von 4 h von +80°C auf -25°C abgesenkt, 4 h bei -25°C gehalten und schließlich wiederum innerhalb von 4 h von -25°C auf +30°C erhöht.
Vor Beginn der Dauerschalttests unter Temperaturwechselbelastung wurde die schaltbare Ladungskapazität der Proben bei einer Färbe- bzw. Entfärbezeit von jeweils 3 min und einer Spannung von 1,4 V bei etwa 20°C Scheibentemperatur bestimmt. Diese Bestimmung wurde nach 4, 11, 18, 32, 60 bzw. 88 Temperaturzyklen (= Tagen) wiederholt. Nach 88 Temperaturzyklen (entsprechend 21.120 Färbe-/Entfärbezyklen) betrug die schaltbare Ladungskapazität und damit der erreichbare optische Schalthub der Probe nach Vergleichsbeispiel 1 nur noch 26% der Ausgangskapazität, hat sich also in etwa auf ein Viertel des Ausgangswertes verringert. Dagegen betrug die schaltbare Ladungskapazität der Probe nach Ausführungsbeispiel 2 noch 69% des Ausgangswertes.
Das erfindungsgemäße elektrochrome Element weist also eine wesentlich höhere Langzeitstabilität als ein Element nach dem Stand der Technik auf.

## Patentansprüche

**1.** Ionenleitende thermoplastische Zusammensetzung, enthaltend einen teilacetalisierten Polyvinylalkohol, mindestens ein Leitsalz und mindestens einen Weichmacher, **dadurch gekennzeichnet, dass** der teilacetalisierte Polyvinylalkohol ein Copolymer, enthaltend die Monomereinheiten

- Vinylacetat
- Vinylalkohol
- Acetal I aus Vinylalkohol und mindestens einem Aldehyd der Formel I

$R^1$-CHO I

mit $R^1$: verzweigter oder unverzweigter Alkylrest mit 1 bis 10 Kohlenstoffatomen
- Acetal II aus Vinylalkohol und einer Carbonylverbindung der Formel II

$$R^2-\underset{\underset{O}{\|}}{C}-R^3-Y \qquad II$$

mit $R^2$ = H, verzweigter oder unverzweigter Alkylrest mit 1 bis 10 Kohlenstoffatomen,
$R^3$ = direkter Verbindung, verzweigter oder unverzweigter Alkylrest mit 1 bis 10 Kohlenstoffatomen, Arylrest mit 6 bis 18 Kohlenstoffatomen, und
Y = $-CO_2H$, $-SO_3H$, $-PO_3H_2$

ist.

**2.** Ionenleitende thermoplastische Zusammensetzung nach Anspruch 1, **dadurch gekennzeichnet, dass** das Verhältnis der Monomereinheiten im teilacetalisierten Polyvinylalkohol von Acetal I zu Acetal II 1:1 bis 10.000:1 beträgt.

**3.** Ionenleitende thermoplastische Zusammensetzung nach Anspruch 1 oder 2, **dadurch gekennzeichnet, dass** der teilacetalisierte Polyvinylalkohol

- 0,01 bis 5 Gew.% Vinylacetat
- 10 bis 40 Gew.% Vinylalkohol und
- 40 bis 80 Gew.% Acetale I und II

enthält.

**4.** Ionenleitende thermoplastische Zusammensetzung nach einem der Ansprüche 1 bis 3, **dadurch gekennzeichnet, dass** als Carbonylverbindung der Formel II säurefunktionalisierte Aldehyde eingesetzt werden.

**5.** Elektrochromes Verbundsystem aufgebaut aus zwei mit Elektroden beschichteten Körpern, von denen mindestens einer transparent ist und mindestens einer einen elektrochromen Film aufweist, die durch eine Folie mit einer Zusammensetzung gemäß einer der Ansprüche 1 bis 4 getrennt sind.

**6.** Elektrochromes Verbundsystem nach Anspruch 5, **dadurch gekennzeichnet, dass** mindestens einer der elektrochromen Filme ein bei katodischer Reduktion die Farbe änderndes Metallpolycyanometallat, Übergangsmetalloxid oder leitfähiges Polymer enthält.

**7.** Elektrochromes Verbundsystem nach Anspruch 5, **dadurch gekennzeichnet, dass** mindestens einer der elektrochromen Filme ein bei anodischer Oxidation die Farbe änderndes Metallpolycyanometallat, Übergangsmetalloxid oder leitfähiges Polymer enthält.

**8.** Verfahren zur Herstellung einer ionenleitenden Folie durch Extrusion einer Mischung von

a) 50 - 90 Gew.% eines teilacetalisierten Polyvinylalkohols enthaltend die Monomereinheiten

- Vinylacetat
- Vinylalkohol
- Acetal I aus Vinylalkohol und einem Aldehyd der Formel I

$$R^1\text{-CHO} \qquad I$$

mit $R^1$, verzweigter oder unverzweigter Alkylrest mit 1 bis 10 Kohlenstoffatomen
- Acetal II aus Vinylalkohol und einer Carbonylverbindung der Formel II

$$R^2-C-R^3-Y$$
||
O
II

mit $R^2$ = H, verzweigter oder unverzweigter Alkylrest mit 1 bis 10 Kohlenstoffatomen,
$R^3$ = verzweigter oder unverzweigter Alkylrest mit 1 bis 10 Kohlenstoffatomen, Arylrest mit 6 bis 18 Kohlenstoffatomen und
Y = $-CO_2H$, $-SO_3H$, $-PO_3H_2$

b) 10 bis 50 Gew.% mindestens eines Weichmachers und
c) 0,1 bis 25 Gew.% mindestens eines Leitsalzes.

**9.** Verfahren nach Anspruch 8, **dadurch gekennzeichnet, dass** die Extrusion unter Schmelzebruchbedingungen durchgeführt wird.

**10.** Verfahren nach Anspruch 8, **dadurch gekennzeichnet, dass** die Folie ein- oder beidseitig mit einer Rauhigkeit von $R_Z$ 40 - 120 μm geprägt wird.

## Claims

**1.** An ion conductive thermoplastic composition containing a partially acetalated polyvinyl alcohol, at least one supporting electrolyte and at least one plasticizer, **characterised in that** the partially acetalated polyvinyl alcohol is a copolymer containing the monomer units

- vinyl acetate
- vinyl alcohol
- acetal I from vinyl alcohol and at least one aldehyde with the formula I

$R^1$-CHO I

with $R^1$, branched or unbranched alkyl radical with 1 to 10 carbon atoms
- acetal II from vinyl alcohol and a carbonyl compound with the formula II

$$R^2-C-R^3-Y$$
||
O
II

with $R^2$ = H, branched or unbranched alkyl radical with 1 to 10 carbon atoms,
$R^3$ = direct compound, branched or unbranched alkyl radical with 1 to 10 carbon atoms, aryl radical with 6 to 18 carbon atoms and
Y = $-CO_2H$, $-SO_3H$, $- PO_3H_2$.

**2.** The ion conductive thermoplastic composition according to claim 1, **characterised in that** the ratio of the monomer units in the partially acetalated polyvinyl alcohol of acetal I to acetal II is 1:1 to 10,000:1.

**3.** The ion conductive thermoplastic composition according to claim 1 or 2, **characterised in that** the partially acetalated polyvinyl alcohol contains

- 0.01 to 5 % by weight of vinyl acetate
- 10 to 40 % by weight of vinyl alcohol and
- 40 to 80 % by weight of acetals I and II.

**4.** The ion conductive thermoplastic composition according to one of claims 1 to 3, **characterised in that** acidfunctionalised aldehydes are used as carbonyl compound of formula II.

**5.** An eletrochrome composite system consisting of two bodies coated with electrodes at least one of which is transparent and at least one of which exhibits an electrochrome film, which bodies are separated by a film with a composition according to one of claims 1 to 4.

**6.** The eletrochrome composite system according to claim 5, **characterised in that** at least one of the electrochrome films contains a metal polycyanometallate, transition metal oxide or conductive polymer which alter the colour on cathodic reduction.

**7.** The eletrochrome composite system according to claim 5, **characterised in that** at least one of the electrochrome films contains a metal polycyanometallate, transition metal oxide or conductive polymer which alter the colour on anodic reduction.

**8.** A process for the production of an ion conductive film by extrusion of a mixture of

a) 50 - 90 % by weight of a partially acetalated polyvinyl alcohol containing the monomer units

- vinyl acetate
- vinyl alcohol
- acetal I from vinyl alcohol and an aldehyde with the formula I

$$R^1\text{-CHO} \qquad \text{I}$$

with $R^1$, branched or unbranched alkyl radical with 1 to 10 carbon atoms
- acetal II from vinyl alcohol and a carbonyl compound with the formula II

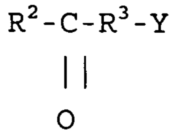

II

with $R^2$ = H, branched or unbranched alkyl radical with 1 to 10 carbon atoms,
$R^3$ = branched or unbranched alkyl radical with 1 to 10 carbon atoms, aryl radical with 6 to 18 carbon atoms and
Y = $-CO_2H$, $-SO_3H$, $-PO_3H_2$

b) 10 to 50 % by weight of at least one plasticizer and
c) 0.1 to 25 % by weight of at least one supporting electrolyte.

**9.** The process according to claim 8, **characterised in that** the extrusion is carried out under melt fracture conditions.

**10.** The process according to claim 8, **characterised in that** the film is embossed on one or both sides with a roughness of $R_z$ of 40 - 120 μm.

### Revendications

**1.** Composition thermoplastique conductrice d'ions, contenant un alcool polyvinylique partiellement transformé en acétal, au moins un sel assurant la conductivité et au moins un plastifiant, **caractérisée en ce que** l'alcool polyvinylique partiellement transformé en acétal est un copolymère qui contient les unités monomères

- acétate de vinyle
- alcool vinylique
- acétal I formé à partir d'alcool vinylique et d'au moins un aldéhyde de formule I

$R^1$-CHO I

avec $R^1$ : groupe alkyle ramifié ou linéaire renfermant 1 à 10 atomes de carbone
- acétal II formé à partir d'alcool vinylique et d'un composé carbonyle de formule II

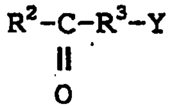

II

avec $R^2$ = H, groupe alkyle ramifié ou linéaire renfermant 1 à 10 atomes de carbone,
$R^3$ = liaison directe, groupe alkyle ramifié ou linéaire renfermant 1 à 10 atomes de carbone, groupe aryle renfermant 6 à 18 atomes de carbone et
Y = $-CO_2H$, $-SO_3H$, $-PO_3H_2$

**2.** Composition thermoplastique conductrice d'ions selon la revendication 1, **caractérisée en ce que** dans le alcool polyvinylique partiellement transformé en acétal, le rapport entre les unités monomères acétal I et acétal II est compris entre 1:1 et 10.000:1.

**3.** Composition thermoplastique conductrice d'ions selon les revendications 1 ou 2, **caractérisée en ce que** le alcool polyvinylique partiellement transformé en acétal contient

- 0,01 à 5 % en poids d'acétate de vinyle
- 10 à 40 % en poids d'alcool vinylique et
- 40 à 80 % en poids des acétals I et II.

**4.** Composition thermoplastique conductrice d'ions selon l'une des revendications 1 à 3, **caractérisée en ce que** des aldéhydes comportant une fonction acide sont utilisés en tant que composé carbonyle de formule II.

**5.** Système composite électrochrome, constitué de deux corps pourvus d'électrodes de surface dont au moins un est transparent et dont au moins un est pourvu d'un film électrochrome, lesdits corps étant séparés par une feuille ayant une composition selon l'une des revendications 1 à 4.

**6.** Système composite électrochrome selon la revendication 5, **caractérisé en ce qu'**au moins un des films électrochromes contient un polycyanométallate de métal, un oxyde de métal de transition ou un polymère conducteur qui change de couleur lorsqu'il subit une réduction cathodique.

**7.** Système composite électrochrome selon la revendication 5, **caractérisé en ce qu'**au moins un des films électrochromes contient un polycyanométallate de métal, un oxyde de métal de transition ou un polymère conducteur qui change de couleur lorsqu'il subit une réduction anodique.

**8.** Procédé de fabrication d'une feuille conductrice d'ions par extrusion d'un mélange constitué de

a) 50 à 90 % en poids d'un alcool polyvinylique partiellement transformé en acétal, contenant les unités monomères

- acétate de vinyle
- alcool vinylique
- acétal I formé à partir d'alcool vinylique et d'un aldéhyde de formule I

$R_1$-CHO I

avec $R^1$ : groupe alkyle ramifié ou linéaire renfermant 1 à 10 atomes de carbone
- acétal II formé à partir d'alcool vinylique et d'un composé carbonyle de formule II

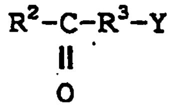

II

avec $R^2$ = H, groupe alkyle ramifié ou linéaire renfermant 1 à 10 atomes de carbone, $R^3$ = liaison directe, groupe alkyle ramifié ou linéaire renfermant 1 à 10 atomes de carbone, groupe aryle renfermant 6 à 18 atomes de carbone et
Y = $-CO^2H$, $-SO_3H$, $PO_3H_2$

b) 10 à 50 % en poids d'au moins un plastifiant et
c) 0,1 à 25 % en poids d'au moins un sel assurant la conductivité.

**9.** Procédé selon la revendication 8, **caractérisé en ce que** l'extrusion est réalisée dans des conditions de rupture d'extrudat.

**10.** Procédé selon la revendication 8, **caractérisé en ce que** la feuille est soumise, sur l'une des ses faces ou sur les deux, à un gaufrage se traduisant par une rugosité $R_z$ comprise entre 40 et 120 $\mu$m.

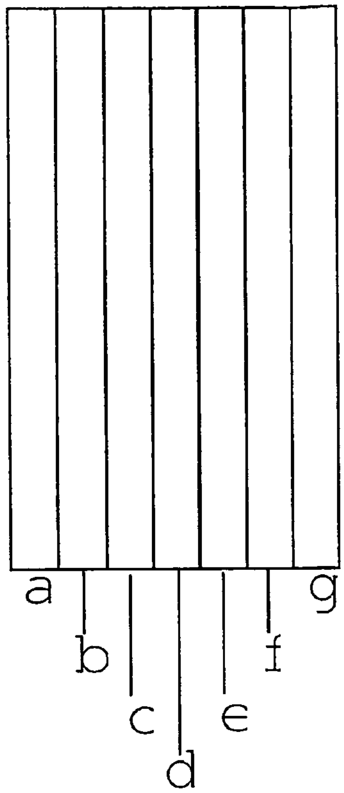
a
b
c
d
e
f
g

Fig. 1

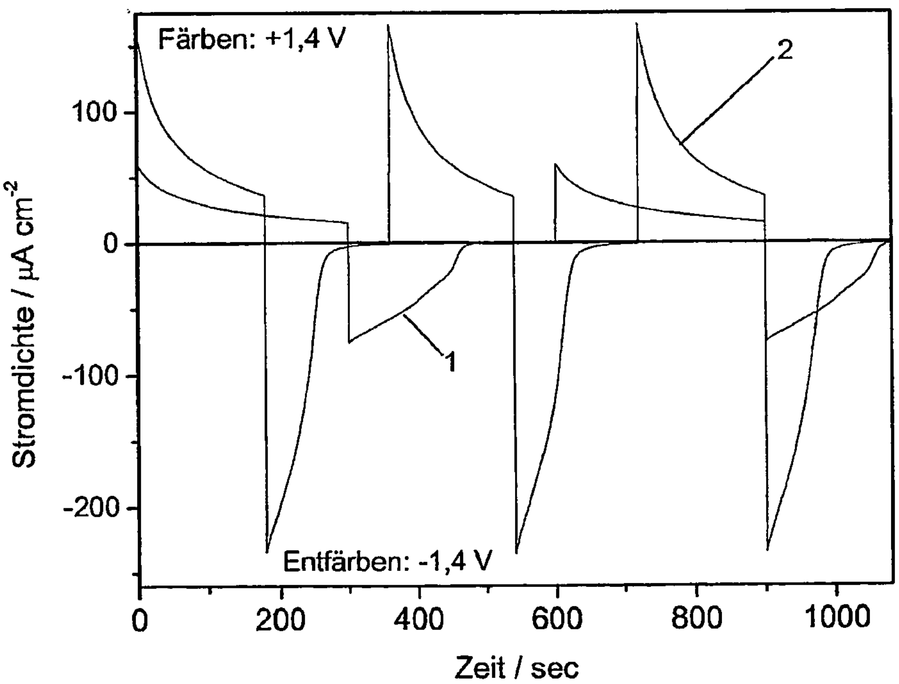
Färben: +1,4 V
Entfärben: -1,4 V
Stromdichte / µA cm⁻²
Zeit / sec
100
0
-100
-200
0
200
400
600
800
1000
1
2

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1056097 A
- US 5244557 A
- EP 392839 A
- EP 461685 A
- EP 499115 A
- EP 1227362 A
- EP 0657897 A
- DE 10143190
- EP 0185863 A
- EP 0185863 B1